# FASCICULE DE BREVET EUROPEEN

(11) **EP 2 714 378 B1**
(45) Date de publication et mention de la délivrance du brevet: **28.10.2015**
(21) Numéro de dépôt: 12725098.3
(22) Date de dépôt: 03.05.2012
(51) Int. Cl.: B29C 70/38

(54) **PROCEDE DE CONTROLE DU JEU ENTRE BANDES DEPOSEES PAR UNE TETE DE DRAPAGE ET SOUS-ENSEMBLE DE TETE DE DRAPAGE A DISPOSITIF DE CONTROLE EMBARQUE**
VERFAHREN ZUR ÜBERPRÜFUNG DES SPIELS ZWISCHEN DURCH EINEN FALTENFORMUNGSKOPF ABGELEGTEN BÄNDERN UND BAUGRUPPE EINES FALTENFORMUNGSKOPFS MIT INTEGRIERTER ÜBERPRÜFUNGSVORRICHTUNG
METHOD FOR CHECKING THE PLAY BETWEEN STRIPS DEPOSITED BY A DRAPE-FORMING HEAD, AND SUB-ASSEMBLY OF A DRAPE-FORMING HEAD WITH AN ONBOARD CHECKING DEVICE

(30) Priorité: 31.05.2011 FR 1154774; 15.06.2011 FR 1155228
(43) Date de publication de la demande: 09.04.2014
(73) Titulaire: Fives Machining, 46400 Saint-Laurent-les-Tours (FR)
(72) Inventeur: CAYMENT, Michel Robert José, F-46130 Bretenoux (FR); MARQUES, Philippe Claude, F-12700 Capdenac-Gare (FR)
(74) Mandataire: Lavé, Stéphanie
(86) Numéro de dépôt international: PCT/FR2012/050990
(87) Numéro de publication internationale: WO 2012/164184

(56) Documents cités:
- WO-A1-2011/116191
- US-A1- 2007 229 805
- US-A1- 2007 271 064

## Description

La présente invention concerne la fabrication de pièces composites au moyen de bandes déposées par une tête de drapage, et plus précisément le contrôle de la qualité de cette dépose, notamment par le contrôle des jeux interbandes.

Pour la fabrication de pièces diverses telles que des ailes d'avion, il est connu, par exemple par le document US 4842684 au nom de la Demanderesse, de déposer automatiquement sur un moule ou outillage de dépose, grâce à un robot ou une machine munie d'une tête de drapage, un ruban composite constitué d'éléments de fibres (carbone, verre, Kevlar®, etc.) encollées, par imprégnation d'une résine thermodurcissable (les éléments sont alors généralement supportées sur un ruban de support en papier ou en film plastique) ou d'une résine thermoplastique. Le ruban composite est dévidé d'une bobine pour passer sur la tête de drapage où le ruban de fibres préimprégnées est séparé du ruban de support, ce dernier étant renvoyé sur un mandrin d'enroulement, tandis que le préimprégné est appliqué sur le moule ou sur les couches précédentes déjà déposées, par un organe de compactage constitué généralement d'un rouleau ou un sabot applicateur lié à la tête de drapage. Des organes appropriés assurent le guidage du préimprégné jusqu'à la zone de dépose, en aval du circuit de la bande, et la séparation du préimprégné et de son support au plus près possible de l'organe de dépose. La tête de drapage est montée mobile selon plusieurs axes (généralement cinq axes ou six axes) de manière à s'adapter aux formes de plus en plus complexes des pièces à réaliser selon cette technique. Cette tête se déplace avec une grande rapidité, par exemple 1 m/s.

Compte tenu des formes des pièces réalisées, et notamment de leurs bords, il convient non seulement de déposer des tronçons de ruban « *pleine largeur »*, à quatre cotés, mais également des tronçons de formes diverses, obtenus par découpe complexe du ruban.

Pour les découpes traversantes de formes simples, on utilise un processus de dépose monophase qui comprend la découpe *in situ* des bandes à déposer et leur dépose immédiate par la même machine. Un couteau mécanique ou à ultrasons coupe le ruban préimprégné directement sur son papier support sans couper ce dernier qui sera réenroulé sur le mandrin après pelage.

Pour les bandes à découper de forme complexe, on utilise un procédé biphase, selon lequel la découpe se fait en amont dans le procédé, avec une première machine spécialisée et où les tronçons successifs prédécoupés sont soit laissés sur le ruban de support initial ou disposés entre deux protecteurs et enroulés sur une cassette installée ensuite sur la tête de drapage.

Qu'il s'agisse du procédé monophase ou du procédé biphase, on utilise pour la dépose des rubans préimprégnés une tête de drapage qui peut être simple ou double : cette dernière comprend deux circuits de dépose de bande aboutissant en aval à une zone de dépose à l'extrémité basse de la tête. Les documents FR2888156, FR2894510 et FR2949378 eu nom de la Demanderesse montrent des exemples de réalisation de têtes de drapage doubles, généralement avec deux organes de compactage, des rouleaux en l'occurrence, un par circuit, qui peuvent être de largeur différente. Ces deux rouleaux sont généralement très voisins l'un de l'autre, ne laissant qu'un espace étroit entre eux, typiquement de moins de deux centimètres.

Il est important de contrôler en permanence la qualité de la dépose de la bande déposée par la tête de drapage, et notamment de vérifier que les différents tronçons de bandes ne se chevauchent pas mais qu'au contraire, il existe bien entre eux le jeu prévu.

Ce contrôle peut s'exercer de manière purement visuelle, à l'aide de loupes mesurantes. Mais il est très difficiles parce que les bandes de carbone sont noires et que les jeux ne se distinguent pas bien ; les pièces à examiner peuvent être très grandes et larges, ce qui oblige l'opérateur chargé de l'inspection visuelle à monter sur les pièces avec le risque de les abîmer ; enfin le nombre de jeux à vérifier extrêmement grand, puisqu'il peut y avoir par exemple 10 000 bandes complexes à vérifier sur une pièce.

Il est donc souhaitable de trouver un procédé et un dispositif automatique de contrôle de jeu.

On a cherché à contrôler les jeux par un éclairage approprié de la surface et une observation de celle-ci par une caméra dont on analyse les images (les contrastes) : l'expérience à montré que les résultats ont une fiabilité peu élevée, ne dépassant pas 70%.

Par ailleurs, on s'est aperçu que les variations de distance entre la caméra et la surface à observer pouvaient entraîner des difficultés de mise au point focale de la caméra de contrôle et nécessitaient de corriger la hauteur mesurée, en tenant compte de cette distance.

En outre, la zone idéale où le contrôle peut s'effectuer, juste au niveau des deux rouleaux de compactage dans le cas d'une tête de drapage double, est assez étroite et laisse peu de place pour installer un matériel de contrôle.

Le document US 2007/271064 fait connaître un sous-ensemble de drapage présentant les caractéristiques de dispositif et de procédé mentionnées dans les préambules des revendications annexées 1 et 6.

Le document US 2007/229805 fait connaître un dispositif de contrôle inclus dans une tête de drapage.

Mais il reste à trouver un dispositif et un procédé améliorant la fiabilité des systèmes existants et adaptés à s'installer dans une zone étroite du dispositif de drapage.

Le but de l'invention est donc de proposer un procédé et un dispositif embarqué de contrôle des jeux interbandes, ou plus généralement de la surface des bandes déposées, qui surmontent ces difficultés.

L'invention atteint son but grâce à un sous-ensemble d'une tête de drapage pour la dépose sur un outillage de dépose d'une bande de préimprégné amenée au sous-ensemble, le sous-ensemble comportant en aval au moins un organe de dépose et au moins un organe de compactage de la bande de préimprégné, et un dispositif de contrôle de la surface de la bande et notamment du jeu interbande, ce dispositif étant un dispositif de profilométrie qui comprend une source lumineuse laser projetant une ligne lumineuse sur la surface à contrôler et une caméra pour collecter l'image de la ligne lumineuse projetée, caractérisé en ce que le dispositif comprend un prisme disposé au voisinage de la surface à contrôler dans l'axe de la caméra de manière à renvoyer à la caméra l'image de la ligne lumineuse projetée qui lui parvient sous un certain angle.

Les méthodes de profilométrie 2D utilisant la triangulation laser sont connues en elles-mêmes, et sont souvent utilisées dans divers secteurs de l'industrie, comme décrit par exemple dans les documents US 6621060 et US7423734. Elles consistent à projeter une ligne laser sur une surface et à analyser l'image de cette ligne par une caméra disposée généralement obliquement par rapport au faisceau laser. La société Keyence commercialise aussi des profilomètres 2D sous forme de boîtiers compacts mais ceux là ne peuvent pas être disposés dans la zone de dépose en aval de la tête de nappage, compte tenu de sa géométrie particulière et du peu de place disponible au niveau de cette zone de dépose. L'invention permet de résoudre cette difficulté en utilisant un prisme au voisinage de la surface à contrôler, dans la zone de dépose, ce prisme permettant de conduire obliquement l'image vers la caméra ; celle-ci peut alors être placée librement et notamment être déportée avec la source lumineuse et le reste du dispositif à un endroit moins étroit de la tête de drapage.

De fait, dans la version préférée de l'invention, la caméra et la source lumineuse laser sont logées côte à côte dans un boîtier déporté disposé à distance très au-dessus du ou des organes de compactage, le prisme étant relié au boîtier et à la caméra par un carter allongé disposé verticalement au voisinage du ou des organes de compactage. Par « très » au-dessus des organes de compactage, on entend qu'ils sont non seulement au-dessus des organes de compactage eux-mêmes, tels que les rouleaux de compactage, mais aussi au-dessus de leur système de support et d'entraînement qui permet leur débattement en hauteur.

Lorsque l'invention est appliquée à une tête de drapage double à deux organes de compactage, le carter allongé est avantageusement disposé dans l'intervalle entre les deux organes de compactage.

Avantageusement, le dispositif de contrôle comporte deux ensembles de boîtier et de prisme, destinés à encadrer les deux bords d'une bande déposée.

Avantageusement, les deux ensembles de boîtier et de prisme sont montés avec un écartement modifiable pour s'accommoder à la largeur de bande déposée.

L'invention concerne aussi un procédé de contrôle du jeu interbande existant entre deux bandes de préimprégné déposées par un sous-ensemble d'une tête de drapage pour la dépose sur un outillage de dépose d'une bande de préimprégné amenée au sous-ensemble, le sous-ensemble comportant en aval au moins un organe de dépose et au moins un organe de compactage de la bande de préimprégné, le procédé de contrôle du jeu interbande utilisant un procédé de profilométrie, à savoir qu'on projette une ligne lumineuse sur la surface à contrôler, et qu'on fait observer par une caméra l'image de cette ligne lumineuse, caractérisé en ce que l'image est renvoyée sous un certain angle dans un prisme disposé au voisinage de la surface à contrôler puis renvoyée dans l'axe de la caméra.

L'invention permet d'utiliser un matériel relativement classique et robuste, notamment pour la caméra qui n'a pas besoin d'être une micro-caméra ou une caméra-crayon.

Le procédé de l'invention est avantageusement mis en oeuvre après une étape préalable qui permet de distinguer les bourrelets (dus à un chevauchement) des bords de bande. En effet le profil d'un bord de bande (ou d'une fin de bande) est semblable à un profil de chevauchement, et il est utile que le programme intègre la localisation des bords de bande pour ne pas les confondre avec des bourrelets.

Le procédé de détection automatique de profil conforme à l'invention peut être utilisé d'abord dans un cadre préventif pour mémoriser les contrôles et s'en servir pour optimiser la programmation de la tête de drapage et, une fois la programmation idoine faite, dans un cadre curatif, pour donner des alertes après que la surface de chaque couche a été contrôlée et qu'un défaut a été constaté. Le logiciel de programmation définit les zones à contrôler en tenant compte des rubans déjà déposés.

Naturellement, l'invention peut non seulement être utilisée pour le contrôle du jeu interbande mais aussi pour contrôler d'autres aspects détectables par profilométrie, comme les extrémités de ruban (« end-of-ply ») ou des contours de couche.

D'autres caractéristiques et avantages de l'invention ressortiront de la description suivante d'un exemple de réalisation. Il sera fait référence aux dessins annexés sur lesquels :
La figure 1 est une vue schématique de face d'une tête de drapage double incorporant le dispositif de mesure conforme à l'invention.
La figure 2 est une vue en perspective du dispositif de mesure de l'invention, isolé de la tête de drapage.
La figure 3 est une vue schématique de face illustrant le principe de la mesure avec le dispositif de l'invention.
Les figures 4A et 4B sont des vues perspectives schématiques de face et de côté du bas de la tête de drapage double avec le dispositif de l'invention, dans une première position des rouleaux de compactage et avec un premier écartement des deux parties du dispositif.
Les figures 5A et 5B sont des vues perspectives schématiques de face et de côté du bas de la tête de drapage double avec le dispositif de l'invention, dans une seconde position des rouleaux de compactage et avec un second écartement des deux parties du dispositif.
La figure 6 représente quatre dispositions classiques de bandes de carbone en vue de dessus.
Les figures 7A et 7B représentent schématiquement de côté deux bandes de carbone déposées dans des situations respectives de jeu et de recouvrement.

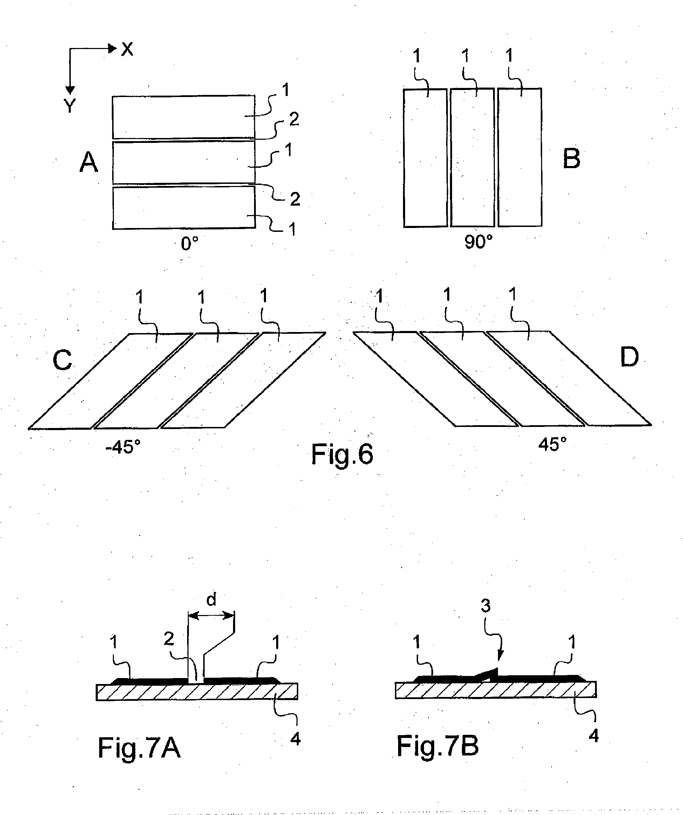

On commencera par se reporter aux figures 6, 7A et 7B qui illustrent les schémas de dépose de bandes composites 1 de fibres de carbone encollées. Une pièce est constituée d'un empilage, sur un outillage de dépose 4, de couches formées de bandes déposées. Pour donner au produit des propriétés isotropes, ces couches ont diverses orientations, par exemple respectivement à 0°, 90°, -45° et +45°, et sont empilées de manière alternée par la tête de drapage. Comme on le voit, une bande 1 est placée à côté d'une couche voisine 1 en respectant un certain jeu 2, d'une valeur d qui est couramment entre 0 et 2,5 mm. Il convient de respecter et contrôler ce jeu et d'éviter le phénomène de recouvrement ou de chevauchement 3 représenté sur la figure 7B.

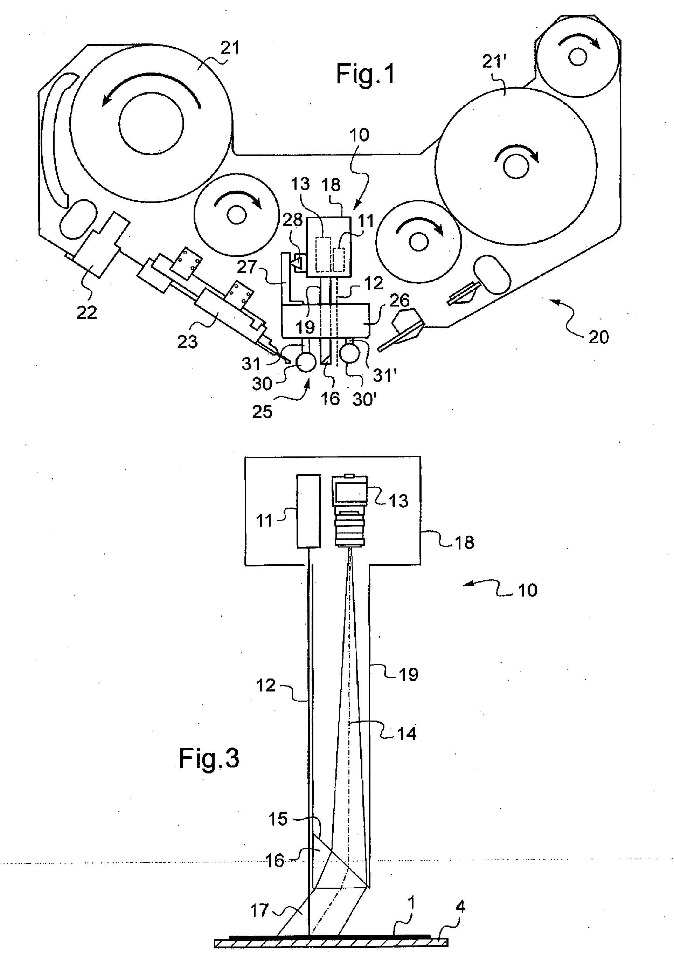

Le drapage des couches les unes sur les autres peut induire localement des pentes, inférieures à 10 %, sur le profil constitué. Ces pentes et la différence de niveaux de la surface font que l'observation qu'on peut en faire par selon un axe vertical (en admettant que la surface empilée est disposée sur un support horizontal) est entachée d'erreur : la surface réelle observée peut se trouver à quelques millimètres en avant ou en arrière de la surface théorique observée et fausser la mesure. C'est pourquoi le procédé et le dispositif de l'invention privilégient une observation oblique de la surface à observer, illuminée par un rayon laser normal à la surface de l'outillage 4. Le principe en est illustré sur la figure 3.

Le dispositif de contrôle 10 comprend un dispositif d'éclairage ou source lumineuse laser 11 qui envoie un faisceau lumineux collimaté 12 verticalement sur la surface de la bande 1 déposée sur l'outillage horizontal 4 (ou sur plusieurs couches déjà empilées sur cet outillage 4). La source laser 11 est voisine d'une caméra d'axe vertical 14 parallèle et voisin du faisceau 12. La caméra 13 peut ainsi voir la face oblique 15 d'un prisme droit 16 qui reçoit les rayons 17 réfléchis par la surface de la bande 1, après qu'ils ont été réfractés dans le prisme 16. La source lumineuse 11 ainsi que la caméra 13 sont disposées dans un boîtier 18, et un carter allongé 19 de hauteur appropriée est placé sous le boîtier 18 pour porter à son extrémité le prisme 16 et protéger l'image observée. Ce prisme 16 fait par exemple 10 mm de large sur sa face horizontale, et impose une déviation de 27° de l'image. L'éclairage collimaté 11 peut être réalisé par des LED laser qui permettent plus de précision qu'une source laser classique. Le carter allongé 19 a aussi environ cette dimension de 10 mm en largeur, ce qui lui permet de passer entre les rouleaux d'une machine de drapage double, dont les rouleaux sont faiblement écartés. Cela permet donc de « remonter » tout le dispositif de contrôle, hormis le prisme et son carter, au-dessus des rouleaux, dans une zone protéger et plus spacieuse, de manière à obtenir la structure qu'on va maintenant décrire en référence aux figures 1, 2, 4A, 4B, 5A, 5B. En revanche, le prisme 16 reste facilement accessible pour être nettoyé ou changé.

La figure 1 montre schématiquement le dispositif 10 embarqué sur une tête de nappage double 20 utilisée pour un procédé de dépose à une ou deux phases. Cette tête 20 est destinée à être montée, mobile selon différents axes (5 voire 6) en bas d'une poutre suspendue à un portique mobile au-dessus de l'outillage de dépose. La bande composite est déroulée de l'une ou l'autre des cassettes 35 ou 35' et arrive en traversant des postes de découpe 22, éventuellement de chauffage, et des organes divers de guidage et de dépose 23, à la section basse la plus en aval de la tête, le poste de dépose lui-même 25 qui comporte notamment deux rouleaux de compactage 30, 30', montés par des tiges rétractables 31, 31' sur un ensemble de support et de commande des rouleaux 26. Les rouleaux 30, 30' ont par exemple 60 mm de diamètre et respectivement 300 mm et 150 mm de longueur. Ils peuvent se rétracter en hauteur sur une course de 25 mm. L'espace laissé horizontalement entre les surfaces des rouleaux 30, 30' est par exemple de 14 mm : les dessins des figures 1, 4A, 4B, 5A, 5B ne sont pas à l'échelle et l'espace entre les rouleaux 30, 30' a été exagéré pour permettre la représentation. En effet, dans cet espace on peut faire passer le carter 19 du dispositif de contrôle 10 de sorte que son prisme 16 vient dans la zone de dépose 25, entre les rouleaux 30, 30'. Le boîtier 18 contenant la source lumineuse 11 et la caméra 13 est, quant à lui, situé au-dessus des rouleaux. Il est fixé par exemple à l'ensemble 26 de support des rouleaux 30, 30', grâce à une équerre 27.

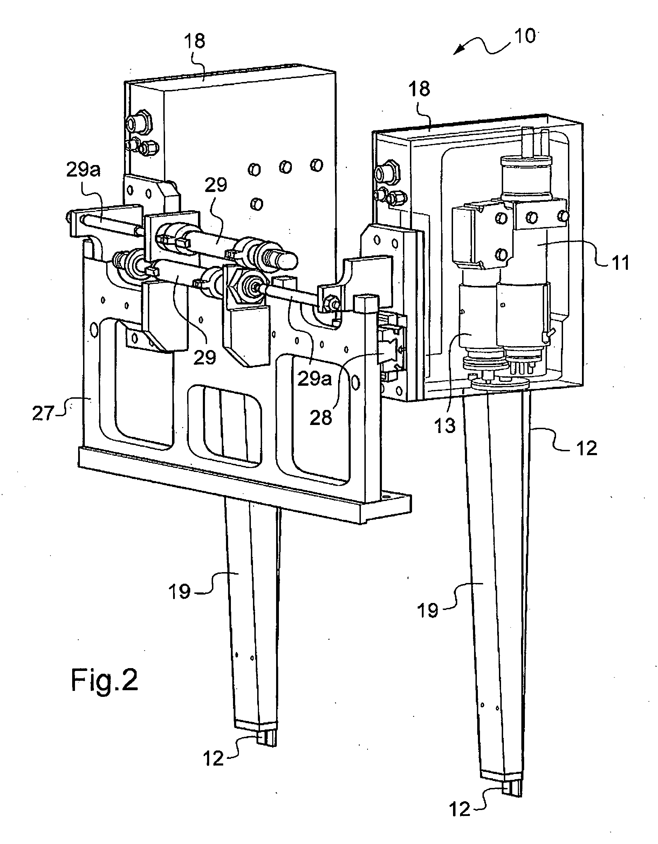

La figure 2 montre plus en détail le montage du dispositif de contrôle 10 sur l'équerre 27. D'une part, le dispositif de contrôle 10 est double et comprend deux boîtiers 18 contenant chacun leur source lumineuse 11 qui émet un faisceau 12, et leur caméra 13 disposée au-dessus du carter allongé 19. Chaque boîtier 18 est monté en coulissement horizontal sur la paroi verticale de l'équerre 27 grâce à des glissières 28. Le déplacement horizontal des boîtiers 18 sur leurs glissières 28 est obtenu par des vérins horizontaux 29 fixés sur l'équerre 27 et dont la tige 29a est reliée à un boîtier respectif 18.

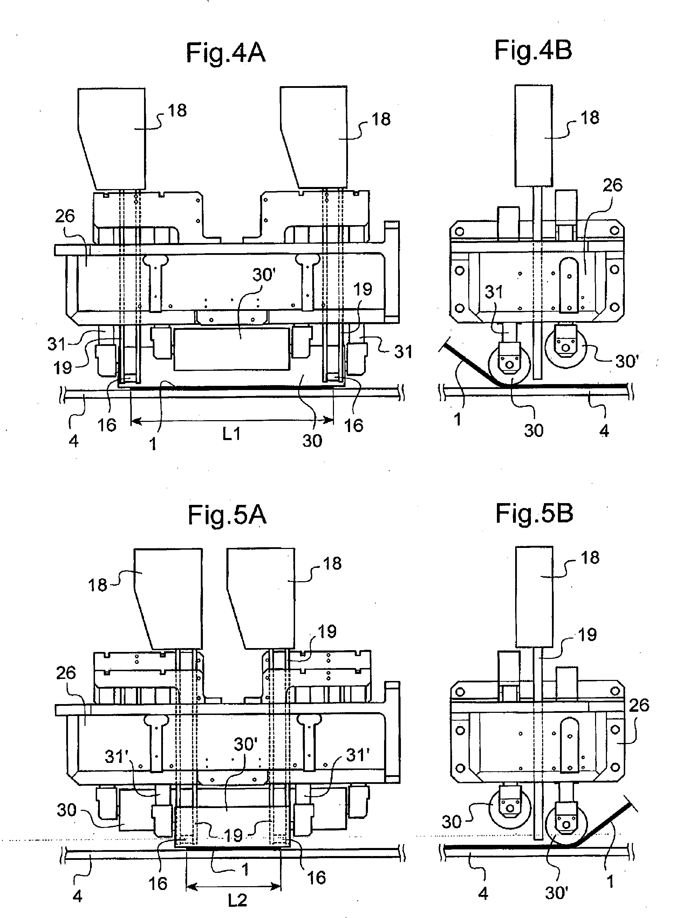

Comme le montrent les figures 4A, 4B, 5A, 5B, les deux boîtiers 18 du dispositif de contrôle 10 peuvent prendre des configurations :
- d'espacement maximal, dans les figures 4A, 4B, avec un écartement L1 par exemple de 300 mm (ou environ 12 pouces) permettant le contrôle des jeux en bordure de bandes larges de 300 mm, ou
- d'espacement minimal, dans les figures 5A, 5B, avec un écartement L2 par exemple de 150 mm (ou environ 6 pouces) permettant le contrôle des jeux en bordure de bandes larges de 150 mm.

Grâce au dispositif de contrôle embarqué conforme à l'invention, on peut réaliser un grand nombre de mesures par seconde, par exemple de 10 à 100, qui sont traitées par un ordinateur approprié relié à l'automate commandant la tête de drapage, et contrôler ainsi la qualité de la dépose de couches.

## Revendications

1. Sous-ensemble d'une tête de drapage (20) pour la dépose sur un outillage de dépose d'une bande (1) de préimprégné amenée au sous-ensemble, le sous-ensemble comportant en aval au moins un organe de dépose (23) et au moins un organe de compactage (30, 30') de la bande de préimprégné, et un dispositif (10) de contrôle de la surface de la bande et notamment du jeu interbande, ce dispositif (10) étant un dispositif de profilométrie qui comprend une source lumineuse laser (11) projetant une ligne lumineuse sur la surface à contrôler et une caméra (13) pour collecter l'image de la ligne lumineuse projetée, **caractérisé en ce que** le dispositif comprend un prisme (16) disposé au voisinage de la surface à contrôler dans l'axe de la caméra (13) de manière à renvoyer à la caméra (13) l'image de la ligne lumineuse projetée qui lui parvient sous un certain angle.

2. Sous-ensemble selon la revendication 1, **caractérisé en ce que** la caméra (13) et la source lumineuse (11) sont logées côte à côte dans un boîtier (18) déporté disposé à distance très au-dessus du ou des organes (30, 30') de compactage, le prisme (16) étant relié au boîtier (18) et à la caméra (13) par un carter allongé (19) disposé verticalement au voisinage du ou des organes de compactage (30, 30').

3. Sous-ensemble selon la revendication 2, **caractérisé en ce que** la tête de drapage (10) est double et **en ce que** le carter allongé (19)est disposé dans l'intervalle entre les deux organes de compactage (30, 30').

4. Sous-ensemble selon l'une quelconque des revendications 1 à 3, **caractérisé en ce que** le dispositif de contrôle (10) comporte deux ensembles de boîtier (18) et de prisme (16).

5. Sous-ensemble selon la revendication 4, **caractérisé en ce que** les deux ensembles de boîtier (18) et de prisme (16) sont montés avec un écartement modifiable.

6. Procédé de contrôle du jeu interbande existant entre deux bandes de préimprégné déposées par un sous-ensemble d'une tête de drapage (20) pour la dépose sur un outillage de dépose d'une bande de préimprégné (1) amenée au sous-ensemble, le sous-ensemble comportant en aval au moins un organe de dépose (23) et au moins un organe de compactage (30, 30') de la bande de préimprégné, le procédé de contrôle du jeu interbande utilisant un procédé de profilométrie, à savoir qu'on projette une ligne lumineuse sur la surface à contrôler, et qu'on fait observer par une caméra (13) l'image de cette ligne lumineuse, **caractérisé en ce que** l'image est renvoyée sous un certain angle dans un prisme (16) disposé au voisinage de la surface à contrôler puis renvoyée dans l'axe de la caméra (13).

## Patentansprüche

1. Baugruppe eines Faltenformungskopfs (20) zum Ablegen auf einem Ablagewerkzeug eines der Baugruppe zugeführten Vorimprägnierungsbands (1), wobei die Baugruppe nachgelagert mindestens ein Ablageorgan (23) und mindestens ein Kompaktierungsorgan (30, 30') des Vorimprägnierungsbands und eine Kontrollvorrichtung (10) der Oberfläche des Bands und vor allem des Zwischenbandspiels aufweist, wobei diese Vorrichtung (10) eine Profilmessvorrichtung ist, die eine Laserlichtquelle (11), die eine Lichtlinie auf die zu kontrollierende Oberfläche projiziert, und eine Kamera (13) zum Erfassen des Bilds der projizierten Lichtlinie umfasst, **dadurch gekennzeichnet, dass** die Vorrichtung ein Prisma (16) umfasst, das in der Nähe der zu kontrollierenden Oberfläche in der Achse der Kamera (13) angeordnet ist, um an die Kamera (13) das Bild der projizierten Lichtlinie zurückzuschicken, die bei ihr in einem bestimmten Winkel ankommt.

2. Baugruppe nach Anspruch 1, **dadurch gekennzeichnet, dass** die Kamera (13) und die Lichtquelle (11) nebeneinander in einem versetzten Gehäuse (18) angeordnet sind, die beabstandet sehr oberhalb des oder der Kompaktierungsorgane (30, 30') angeordnet ist, wobei das Prisma (16) mit dem Gehäuse (18) und der Kamera (13) durch einem längliches Kasten (19) verbunden ist, das vertikal in der Nähe des oder der Kompaktierungsorgane (30, 30') angeordnet ist.

3. Baugruppe nach Anspruch 2, **dadurch gekennzeichnet, dass** der Faltenformungskopfs (10) doppelt ist und dass der längliche Kasten (19) im Abstand zwischen den zwei Kompaktierungsorganen (30, 30') angeordnet ist.

4. Baugruppe nach einem der Ansprüche 1 bis 3, **dadurch gekennzeichnet, dass** die Kontrollvorrichtung (10) zwei Gehäuse- (18) und Prismengruppen (16) aufweist.

5. Baugruppe nach Anspruch 4, **dadurch gekennzeichnet, dass** die zwei Gehäuse- (18) und Prismengruppen (16) mit einem veränderbaren Abstand montiert sind.

6. Kontrollverfahren des zwischen zwei von einer Baugruppe eines Faltenformungskopfs (20) zum Ablegen auf einem Ablagewerkzeug eines der Baugruppe zugeführten Vorimprägnierungsbands (1) abgelegten Vorimprägnierungsbändern vorhandenen Zwischenbandspiels, wobei die Baugruppe nachgelagert mindestens ein Ablageorgan (23) und mindestens ein Kompaktierungsorgan (30, 30') des Vorimprägnierungsbands aufweist, wobei das Kontrollverfahren des Zwischenbandspiels ein Profilmessverfahren nutzt, was bedeutet, dass eine Lichtlinie auf die zu kontrollierende Oberfläche projiziert wird und dass das Bild dieser Lichtlinie von einer Kamera (13) beobachtet wird, **dadurch gekennzeichnet, dass** das Bild in einem bestimmten Winkeln in ein Prisma (16) zurückgeschickt wird, das in der Nähe der zu kontrollierenden Oberfläche angeordnet ist, und danach in der Achse der Kamera (13) zurückgeschickt wird.

## Claims

1. A subassembly for a drape-forming head (20) for depositing, on a depositing tool, a preimpregnated strip (1) brought to the subassembly, the subassembly including, downstream, at least one depositing member (23) and at least one compacting member (30, 30') for the preimpregnated strip, and a device (10) for checking the surface of the strip and in particular the inter-strip play, that device (10) being a profilometry device that comprises a laser light source (11) projecting a light line on the surface to be checked and a camera (13) for collecting the image of the projected light line, **characterized in that** the device comprises a prism (16) positioned near the surface to be checked in the axis of the camera (13) so as to return the image of the projected light line, which reaches it at a certain angle, to the camera (13).

2. The subassembly according to claim 1, **characterized in that** the camera (13) and a light source (11) are housed side by side in an off-board housing (18) positioned significantly above the compacting member(s) (30, 30'), the prism (16) being connected to the housing (18) and the camera (13) by an elongated case (19) positioned vertically near the compacting member(s) (30, 30').

3. The subassembly according to claim 2, **characterized in that** the drape-forming head (10) is a dual head and **in that** the elongated case (19) is positioned in the interval between the two compacting members (30, 30').

4. The subassembly according to any one of claims 1 to 3, **characterized in that** the checking device (10) includes two housing (18) and prism (16) assemblies.

5. The subassembly according to claim 4, **characterized in that** the two housing (18) and prism (16) assemblies are mounted with an adjustable separation.

6. A method for checking the inter-strip play existing between two preimpregnated strips deposited by a subassembly of the drape forming head (20) for deposition on a deposition tool of a preimpregnated strip (1) brought to the subassembly, the subassembly including, downstream, at least one depositing member (23) and at least one compacting member (30, 30') of the preimpregnated strip, the method for checking the inter-strip play using a profilometry method, i.e., a light line is projected on the surface to be checked, and a camera (13) is used to observe the image of that light line, **characterized in that** the image is returned at a certain angle in a prism (16) positioned near the surface to be checked, then returned to the axis of the camera (13).
